# EUROPEAN PATENT APPLICATION

(11) **EP 3 777 555 A1**
(43) Date of publication of application: **17.02.2021**
(21) Application number: 19774350.3
(22) Date of filing: 08.03.2019
(51) Int. Cl.: A23L 3/36, A23L 7/109, A23L 7/143, A23L 29/212

(54) **FROZEN FOOD, PRODUCTION METHOD THEREFOR, AND FREEZER BURN PREVENTION AGENT**

(30) Priority: 30.03.2018 JP 2018070034
(71) Applicant: Yanmar Power Technology Co., Ltd., Osaka-shi Osaka 530-0013 (JP)
(72) Inventor: TSUCHIYA, Kuniyasu, Osaka-shi, Osaka 530-0013 (JP); NODA, Shuhei, Osaka-shi, Osaka 530-0013 (JP)
(74) Representative: Poindron, Cyrille
(86) International application number: PCT/JP2019/009497
(87) International publication number: WO 2019/188147

(57) **Abstract**

The purpose of the present invention is to provide a frozen food that is protected from freezer burn over the long term without adding food additives such as emulsifiers or thickeners. As a result of the present invention a frozen food is provided that is characterized by containing a processed rice material including cooked high-amylose rice and food to be frozen.

## Description

### TECHNICAL FIELD

The present invention relates to a frozen food using a rice-processed material containing high-amylose rice that has been cooked and a production method for the same, and a freezer burn prevention agent.

### BACKGROUND ART

Frozen food has received support from broad customers because of good shelf life, convenience, and the like. Recently, improved quality of frozen food has been demanded to enhance further consumption.

However, frozen food develops a phenomenon referred to as "freezer burn", in which water in food is sublimated during preservation in a freezer and then air enters into gaps generated by water sublimation and produces oxidation of food. Freezer burn causes various problems such as deterioration of food through drying, oxidation, or the like, reduction in eating quality, and change of color, and significantly reduces commodity value, and hence its solutions have been needed.

For example, Patent Literature 1 proposes prepared frozen noodles for microwave-defrosting, on which attached is an oil-and-fat composition with a high content of oil emulsified that contains an emulsifier, polyhydric alcohol, water, and a predetermined amount of oils and fats.

Nevertheless, to address recent growth of health consciousness, there has been a need for preventing freezer burn without use of food additives such as an emulsifier and a thickener. Additionally, frozen food using such oil-and-fat composition with a high content of oil emulsified had reduction in eating quality such as more hardness and worse feeling on the tongue compared to that before freezing, in heating preparation after a long-term freezing preservation. Thus, conventional technologies have had difficulty in maintaining an excellent freezer burn prevention effect for long periods.

### CITATION LIST

### Patent Literature

Patent Literature 1: Japanese Patent No. 4958937

### DISCLOSURE OF INVENTION

### PROBLEMS TO BE SOLVED BY THE INVENTION

Accordingly, an object of the present invention is to provide a frozen food in which freezer burn is prevented for long periods without adding a food additive such as an emulsifier or a thickener.

Furthermore, another object of the present invention is to provide a production method for a frozen food prevented from freezer burn for long periods without containing a food additive, and a freezer burn prevention agent used for production of such a frozen food.

### MEANS FOR SOLVING THE PROBLEMS

The present invention provides a frozen food characterized by including a rice-processed material containing high-amylose rice that has been cooked, and food to be frozen.

In the frozen food of the present invention, it is preferred that:
(1) the food to be frozen be a grain-containing food,
(2) the grain-containing food be a prepared rice containing rice grains, and the rice-processed material be attached to at least a surface of the rice grains, and
(3) the grain-containing food be noodles or a noodle sheet, and the rice-processed material be kneaded into the noodles or the noodle sheet; and when the grain-containing food is the prepared rice, it is particularly preferred that:
(4) the rice-processed material further contain oils and fats,
(5) the rice-processed material be added in an amount allowing the high-amylose rice and the oils and fats to be added in amounts of 0.2 to 1.6 parts by mass and 0.3 to 7.0 parts by mass on 100 parts by mass of raw rice as a raw material of the prepared rice, respectively, and
(6) the oils and fats include at least one oil selected from among rice oil, rapeseed oil, safflower oil, sesame oil, flaxseed oil, olive oil, avocado oil, almond oil, and chia seed oil;
   and when the grain-containing food is the noodles or the noodle sheet, it is particularly preferred that:
(7) the rice-processed material further contain oils and fats, and
(8) be added in an amount allowing the high-amylose rice and the oils and fats to be added in amounts of 1-30 parts by mass and 5-20 parts by mass relative to 100 parts by mass of a grain raw material of the noodles or the noodle sheet, respectively, and
(9) the oils and fats include at least one oil selected from among rice oil, rapeseed oil, safflower oil, sesame oil, flaxseed oil, olive oil, avocado oil, almond oil, and chia seed oil.
   The present invention also provides a production method for a frozen food characterized by including an addition process of adding a rice-processed material, containing high-amylose rice that has been cooked, to food to be frozen or a raw material thereof.
   In the production method of the present invention, it is preferred that:
(10) the food to be frozen be a prepared rice containing rice grains, and the adding is performed by heat treating, in a cooker, a cooking material that includes raw rice as a raw material for the prepared rice and the rice-processed material.

Furthermore, the present invention also provides a freezer burn prevention agent characterized by including a rice-processed material containing high-amylose rice that has been cooked.

### EFFECT OF THE INVENTION

The frozen food of the present invention includes a rice-processed material containing high-amylose rice that has been cooked, thereby effectively preventing freezer burn for long periods. Thus, frozen food capable of long-term freezing preservation with retaining high quality can be provided.

### DESCRIPTION OF EMBODIMENTS

The frozen food of the present invention includes a rice-processed material containing high-amylose rice that has been cooked, and food to be frozen. Hereinafter, each of the rice-processed material and the food to be frozen will be described.

### 1. Food to be frozen

Frozen food is a material derived by freezing food to be frozen for preservation, and the present invention can be applied generally to food to be frozen in which freezer burn is to be an issue during freezing preservation.

Specific examples of such food to be frozen include fruit such as blueberries and mangos; vegetables such as spinach, French beans, and broccoli; seafood such as tuna, sardine, and clams; meat such as beef, pork, mutton, and chicken; grain such as rice; and food derived by processing/preparing these.

Preferred aspects of the food to be frozen in the present invention will be described below, but the food to be frozen of the present invention is not limited to these.

### 1-1. Grain-containing food

The food to be frozen in the present invention is preferably grain-containing food. Grain-containing food herein refers to food that contains grain as a primary material.

The type of grain is not particularly limited, but specific examples may include rice, foxtail millet, proso millet, Japanese millet, sorghum, corn, wheat, barley, rye, oats, buckwheat, soybeans, adzuki beans, French beans, and peas.

Food that contains grain as a primary material is not particularly limited, but examples may include prepared rice such as cooked rice, pilaf, fried rice, and risotto; noodles such as udon, Japanese soba, Chinese noodles, rice vermicelli, and pasta; a noodle sheet such as jiaozi wrappers and spring roll wrappers; and flour dishes such as okonomiyaki and takoyaki.

### 1-1-1. Prepared rice

The grain-containing food is preferably a prepared rice that contains rice grains. Prepared rice in the present invention refers to rice in form of being heat-prepared to an extent to make raw rice edible, rather than in form of raw rice. Moreover, rice to be prepared may be polished to any degree, and be in any form as brown rice, semi-polished rice, or white rice.

As seen in the specific examples as described above, cooked rice may have presence/absence or any amount of ingredient, presence/absence of seasoning with condiments, or the like as in mixed rice, pilaf, and the like; and may be an aspect derived by further processing rice once cooked as in fried rice or a grilled rice ball. In addition, within a typically acceptable range as frozen food, prepared rice having high water content as in risotto may be used.

In the present invention, the rice-processed material is preferably attached to at least the surface of rice grains. This is because although freezer burn prevention effect can be offered even if of course the rice-processed material is present in a part other than the surface of the rice grains, attachment to the surface of rice grains provides more freezer burn prevention effect. The reason is considered as follows. As described later, the rice-processed material exerts an effect as a freezer burn prevention agent, i.e., an effect of suppressing water sublimation in food to be frozen. As previously described, freezer burn arises from oxidation of food caused by air entering into gaps generated by water sublimation. Therefore, preventing sublimation of water inside the rice grains leads to none of such gaps, thus allowing suppression of oxidation of the rice grains and preventing freezer burn. This effect is markedly exerted by attaching the rice-processed material to the surface of rice grains, which has the most effect on eating quality, oral texture, or the like of prepared rice after thawing; and is particularly markedly exerted when the rice-processed material is attached so as to coat over the entire surface of rice grains. As a result of such effective prevention of freezer burn, reduction in eating quality, change of color, or the like can be prevented even when frozen food derived by freezing the prepared rice is subjected to long-term freezing preservation.

### 1-1-2. Noodles or a noodle sheet

The grain-containing food in the present invention is preferably noodles or a noodle sheet. In the present invention, noodles refer to material derived by adding water to and kneading with wheat flour, or farina, starch, and another primary material other than wheat flour, followed by noodle-making, and are not limited to specific noodles. Examples include udon, Chinese noodles, Japanese soba, somen, hiyamugi, reimen, rice vermicelli, kishimen, macaroni, and pasta. The form of noodles is not particularly limited, and examples include fresh noodles, boiled noodles, steamed noodles, instant noodles, dried noodles, and frozen noodles. Meanwhile, in the present invention, a noodle sheet refers to material derived by adding water to and kneading with wheat flour, or farina, starch, and another primary material other than wheat flour, followed by stretching in a sheet shape, such as jiaozi wrappers, spring roll wrappers, won ton wrappers, shaomai wrappers, or lasagna.

In the noodles or the noodle sheet, the rice-processed material may be attached to the surface of the noodles or the noodle sheet, but is preferably kneaded into the noodles or the noodle sheet in view of providing more freezer burn prevention effect. With kneading the rice-processed material into the noodles or the noodle sheet, the rice-processed material is distributed over the entire noodles or the noodle sheet. This rice-processed material has high water retentivity as described later, allowing retaining water of the entire noodles or the noodle sheet. Therefore, water sublimation from noodles or the noodle sheet is suppressed to prevent freezer burn. Consequently, reduction in eating quality, change of color, or the like can be prevented even when frozen food derived by freezing noodles or a noodle sheet is subjected to long-term freezing preservation.

### 2. Rice-processed material

The rice-processed material used in the present invention contains high-amylose rice that has been cooked.

### 2-1. High-amylose rice

High-amylose rice is rice having a high amylose content included in starch, and generally means rice having an amylose content of 25% or more by mass, but the amylose content may vary depending on weather or the like.

The varieties of high-amylose rice may be either Japonica or Indica, and include, for example, Momiroman, Yumetoiro, Hoshiyutaka, Hoshinishiki, Mirenishiki, Chugoku No. 134, Koshinokaori, and Mizuhochikara. Among the varieties described above, Momiroman or Yumetoiro is preferably used. A mixture of two or more different varieties of high-amylose rice can also be used.

High-amylose rice may be polished to any degree, and be in any form as brown rice, semi-polished rice, or white rice. In view of not affecting appearance of frozen food, white rice is preferable, and in view of providing improved nutritional value of frozen food, brown rice is preferred.

### 2-2. High-amylose rice that has been cooked

High-amylose rice that has been cooked is a material obtained by performing a treatment including at least water-addition and heat treatments (i.e., rice cooking) for high-amylose rice.

The amount of water used in rice cooking of high-amylose rice depends on amylose content in rice, but is preferably over once the amount (mass) of high-amylose rice, more preferably 1-6 times the amount, and particularly preferably 2-4 times the amount. The amount of water within the range described above allows to maintain the degree of viscosity of a gel-form material of cooked rice in a proper range. If the water content is too low, the degree of viscosity of cooked rice thus obtained will be excessively high, leading to difficulty in stirring with oils and fats, attachment to rice grains, kneading into noodles, or the like described later. If the water content is too high, eating quality, oral texture, and the like of frozen food is likely to be reduced, for example, frozen food is made watery.

Prior to rice cooking, high-amylose rice may be immersed into water. The immersion time is not particularly limited and typically about 10-120 minutes; but in winter season, during which water absorbency or moisture content rate of rice is relatively low, it may also be preferable to immerse for a time beyond the range described above.

For rice cooking of high-amylose rice, known heating means can be used such as a rice cooker, a pan, a pressure pan, an electromagnetic cooker (such as an induction heating cooker), a microwave, or a steam oven.

The conditions of heating such as temperature, pressure, and time vary depending on means of heating, quantity of water, and the like, and is difficult to identify unambiguously, but the time during which gelatinization sufficiently proceeds without burning and sticking rice is adjusted appropriately. For example, the conditions may be adjusted in accordance with the mode of condition integrated into heating means (e.g., a rice gruel mode). In the heating temperature, the lower limit of temperature is typically 25°C or more, preferably 60°C or more, and more preferably 80°C or more. The upper limit is 130°C or less, preferably 120°C or less, and more preferably 100°C or less. Heat treatment may be performed along with not only heating but also pressurization, and the temperature condition in this case may also be preferably a condition out of the range described above.

The water used for rice cooking (heating) should just has a liquid form, and water, ingredient other than water (e.g., cow milk, plant-based milk such as soymilk (plain soymilk, processed soymilk), coconut milk, or almond milk, or plant protein), and a mixture thereof can be appropriately selected and used depending on the type of frozen food of interest.

### 2-3. Gel-form rice-processed material

In the present invention, as the rice-processed material, gel-form rice-processed material (hereinafter sometimes referred to as gel-form material) can be used which is obtained by subjecting high-amylose rice that has been cooked to mechanical stirring treatment, thereby leading to phase transition from a gelatinized material (a sol form) to a gel form.

Mechanical stirring treatment means stirring that can destroy tissue by physical motion, and is different from a mere mixing treatment. Mechanical stirring treatment should just be performed using a known stirring device such as a food processor, a homogenizer, a mixer, a kneader, a kneading machine, or an extruder. The stirring device preferably has large torque, because stirring will not be interrupted even if degree of viscosity of the gelatinized material gains during mechanical stirring treatment. Examples of stirring devices with large torque include a food processor (Cuisinart DLC-8P2J).

Hardness and texture of the gel-form material can be controlled by adjusting conditions of mechanical stirring treatment.

The conditions of mechanical stirring treatment can be defined appropriately depending on the state of cooked rice, type of stirring devices, and the like. For example, in rotation speed at no load, the condition is preferably 1,000-3,000 rpm, more preferably 1,200-2,000 rpm, and even more preferably 1,500-1,800 rpm. Moreover, optimum conditions can be chosen appropriately such as decreasing rotation speed and correspondingly taking a long time, or pressure-forming along with stirring with a low-speed screw at about 60 rpm.

These provide a gel-form material of high-amylose rice that has been cooked, with good texture and moderate hardness as gel. Here, good texture means texture obtained in a state of low tan δ described later. In addition, moderate hardness as a gel means, for example, hardness to an extent softer than agar.

After rice cooking (heating), cooling treatment may be performed before mechanical stirring treatment. This can provide a gel-form material with a lower degree of viscosity than that without cooling treatment. Here, the temperature after cooling in cooling treatment is typically 60°C or less.

Hardness of the gel-form material can be comprehensively evaluated by complex elastic modulus. Complex elastic modulus G* is a sum of elasticity component and viscosity component and means general hardness, as described in Japanese Patent No. 5840904. Complex elastic modulus G* is specifically shown with a length of vector as set with storage elastic modulus G' as X-axis and loss elastic modulus G" as Y-axis. Storage elastic modulus G' is information on elasticity. Loss elastic modulus G" is information on viscosity.

The complex elastic modulus G* of the gelled material of cooked rice used in the present invention is preferably 1000 Pa or more, and particularly preferably 1500 Pa or more. If the complex elastic modulus G* is too low, the hardness of the gel-form material is insufficient and for example, likely to degrade oral texture originally belonging to food to be frozen such as noodles or a noodle sheet. In contrast, if the complex elastic modulus G* is too high, the gel-form material is excessively hard, so that the gel-form material cannot be uniformly added to the food to be frozen.

Texture of the gel-form material used in the present invention can be comprehensively evaluated with tan δ, a ratio of viscosity/elasticity. Lower tan δ indicates higher characteristics as an elastic body. This means that the characteristics as an elastic body, in which deformation is generated depending on applied force but is restored to the original form upon removal of the applied force, is made higher. In contrast, higher tan δ indicates higher characteristics as a viscous body. This means that the characteristics as a viscous body, in which deformation is generated depending on applied force and is not restored to the original form even after removal of the applied force, is made higher.

A viscosity/elasticity ratio, tan δ, is specifically calculated from the formula tan δ = G"/G'. δ means an angle between a vector of complex elastic modulus G* and storage elastic modulus G' (X-axis).

The viscosity/elasticity ratio, tan δ, of the gel-form material is preferably 0.3 or less, and particularly preferably 0.2 or less. If the viscosity/elasticity ratio, tan δ, is too high, i.e., the characteristics as a viscous body are dominant, such stirring-gelled material will take a sol form (a paste form). A gel-form material having such paste form is likely to degrade oral texture originally belonging to food to be frozen such as noodles or a noodle sheet.

The gel-form material retains good hardness and texture also after storage. For example, even after a lapse of about 3 days to 2 weeks at 4-25°C, the good hardness and texture described above is to be retained.

By use of the gel-form material, amylose included in high-amylose rice is added as a mesh-like gel form to food to be frozen, and water enters into many small spaces formed within the mesh and is physically surrounded by a mesh of amylose, thereby making water less likely to leave. In other words, the gel-form material has high water retentivity, and functions as a freezer burn prevention agent. Therefore, frozen food using such gel-form material is unlikely to have problems such as deterioration caused by freezer burn, reduction in eating quality, and change of color, and allows freezing preservation with maintaining high quality for long periods.

### 2-4. Oils and fats

The rice-processed material used in the present invention preferably contains oils and fats. Oils and fats may be either plant-based oils and fats or animal-based oils and fats, and can be appropriately selected depending on types of frozen food. Plant-based oils and fats should just be plant-derived oils and fats, and the production method thereof is not particularly limited. Examples of plant-based oils and fats include rapeseed oil (canola oil, salad oil), soybean oil, sunflower seed oil, cottonseed oil, peanut oil, safflower oil, rice oil (rice bran oil), corn oil, safflower oil, kapok oil, sesame oil, evening primrose oil, palm oil, palm kernel oil, shea oil, sal butter, cacao butter, coconut palm oil, perilla oil, lavender oil, mango kernel oil, flaxseed oil, olive oil, avocado oil, almond oil, chia seed oil, coconut oil, and processed oils and fats containing at least one of these as a raw material. Animal-based oils and fats should just be animal-derived oils and fats, and the production method thereof is not particularly limited. Examples of animal-based oils and fats include docosahexaenoic acid (DHA), eicosapentaenoic acid (EPA), beef tallow, lard, fish oil, whale oil, butter derived from milk raw material, milk fat such as fresh cream, and processed oils and fats containing at least one of these as a raw material. Processed oils and fats include hardened oil, interesterified oil, and fractional oil. Moreover, two or more types of these can also be used in combination. Among these, rice oil, rapeseed oil, safflower oil, sesame oil, flaxseed oil, olive oil, avocado oil, almond oil, and chia seed oil are preferably used. In particular, rice oil is preferably used in view of having good compatibility with high-amylose rice.

When the food to be frozen of the present invention is a prepared rice and the rice-processed material contains the oils and fats, the rice-processed material is preferably added in an amount allowing the high-amylose rice and the oils and fats to be added in amounts of 0.2 to 1.6 parts by mass and 0.3 to 7.0 parts by mass on 100 parts by mass of raw rice as a raw material of the prepared rice, respectively. That is because the high-amylose rice and the oils and fats set within the ranges allows effective prevention of sublimation of water in prepared rice, leading to improvement of drying prevention effect. In addition, in view of saving original eating quality of prepared rice, the rice-processed material is preferably added in an amount allowing the high-amylose rice and the oils and fats to be added in amounts of 0.2 to 1.6 parts by mass and 0.3 to 0.7 parts by mass on 100 parts by mass of raw rice, respectively. Moreover, in view of allowing maintenance of particularly good eating quality after thawing, the rice-processed material is preferably added in an amount allowing the high-amylose rice and the oils and fats to be added in amounts of 0.8 to 1.1 parts by mass and 0.3 to 0.7 parts by mass on 100 parts by mass of raw rice, respectively.

The content of the oils and fats is just the content of oils and fats contained in the rice-processed material, and has no limitation by the amount of oils and fats contained in prepared rice. For example, even when prepared rice is fried rice with a high oil-and-fat content (20 g or more of oils and fats per 300 g of raw rice), it is not required to trim the additive amount of the rice-processed material or the content of oils and fats in the rice-processed material depending on the oil-and-fat content in the fried rice.

Meanwhile, when the food to be frozen in present invention is noodles or a noodle sheet and the rice-processed material contains the oils and fats, the rice-processed material is preferably added in an amount allowing the high-amylose rice and the oils and fats to be added in amounts of 1-30 parts by mass, particularly 3-7 parts by mass, and 5-20 parts by mass on 100 parts by mass of a grain raw material of the high-amylose rice in the noodles or the noodle sheet. That is because the high-amylose rice and the oils and fats set within the ranges allows effective prevention of sublimation of water in noodles or the noodle sheet, leading to improvement of drying prevention effect. Moreover, in view of saving original eating quality of noodles or the noodle sheet, the rice-processed material is preferably added in an amount allowing the high-amylose rice and the oils and fats to be added in amounts of 1-30 parts by mass, particularly 3-7 parts by mass, and 10-20 parts by mass on 100 parts by mass of a grain raw material in the noodles or the noodle sheet.

The content of the oils and fats is just the content of oils and fats contained in the rice-processed material, and has no limitation by the amount of oils and fats contained in noodles or a noodle sheet, as in the case that the food to be frozen is prepared rice.

### 3. Freezer burn prevention agent

As seen in the description so far, high-amylose rice that has been cooked has a function as a freezer burn prevention agent. As a rice-processed material contained in the freezer burn prevention agent, a material similar to the rice-processed material described above can be used, and preferred aspects of the rice-processed material are also similarly applied.

The freezer burn prevention agent of the present invention is used by adding it to food to be frozen or a raw material thereof. The frozen food using the freezer burn prevention agent of the present invention is unlikely to have problems such as deterioration caused by freezer burn, reduction in eating quality, and change of color, and allows freezing preservation with maintaining high quality for long periods.

### 4. Production method for a frozen food

The production method for a frozen food of the present invention includes an addition process of adding the rice-processed material into food to be frozen or a raw material thereof. Other processes such as a freezing process can employ a conventional known method.

### 4-1. Addition process

Addition process in the present invention is a process of adding the rice-processed material to food to be frozen or a raw material thereof.

The method for addition is not particularly limited, and examples include kneading, mixing, application, and attachment of the rice-processed material to the food to be frozen or a raw material thereof. For example, for unprepared fruit, vegetables, seafood, and meat, grain, and the like, the addition is typically made by application or attachment. Meanwhile, for prepared products such as cooked rice, udon, spring roll wrappers, okonomiyaki, and takoyaki, the addition is made in any preparation process by any method such as kneading, mixing, application, or attachment. In particular, when the food to be frozen is prepared rice, the addition process is preferably performed by heat treatment of a cooking material including raw rice and the rice-processed material in a cooker.

### 4-2. Freezing process

By freezing food to be frozen to which the rice-processed material is added as described above, the frozen food of the present invention can be produced. For the method for freezing, a conventional known method can be used without any particular limitation, and quick freezing is preferably employed. In view of making freezer burn less likely to occur and rendering thawing treatment such as microwave heating easier, it is preferable to fill a packaged container such as a tray with food to be frozen to which the rice-processed material is added, before or after the freezing process. Freezing treatment can employ either quick freezing or slow freezing, but quick freezing is preferable. Once after freezing by quick freezing, preservation should just be made with typical freezing preservation conditions.

Quick freezing is preferably under conditions of quick freezing at -15°C or less, and particularly -35°C or less. This is because in slow freezing, the rice-processed material attached to the surface of food to be frozen comes off until frozen up, or the rice-processed material in food to be frozen is unevenly distributed, thus being likely to fail to effectively prevent freezer burn. Moreover, that is because in slow freezing, it takes a long time to pass through maximal ice crystal-forming temperature zone (between -1--5°C) and tissue of frozen food is destroyed, thus being likely to make oral texture worse.

### 4-3. Production method for a frozen food in which the food to be frozen is prepared rice

As an example of the representative embodiments of the present invention, a production method for a frozen food in which food to be frozen is prepared rice, particularly cooked rice (white rice), will be specifically described, but the production method for a frozen food according to the present invention is not limited to this.

First, white rice is washed. At that time, the method of rice washing is not particularly limited, and can employ a known technology.

Next, white rice after washing is immersed into water to allow water absorption. The immersion time depends on season, air temperature, type or form of rice, and oral texture or eating quality of cooked rice of interest, but it is preferable to immerse for 30 minutes or more.

Subsequently, water is added to white rice. At this time, water used for immersion may or may not be included in water for addition. For example, white rice after water absorption is separated from water used for immersion with a colander or the like, and water other than that used for immersion may be added to this white rice.

The additive amount of water depends on amylose content in rice, but is preferably over 1.00 the amount (mass) of white rice, and more preferably 1.25-1.35 times the amount, and particularly preferably 1.25-1.30 times the amount. Additionally, the additive amount of water is preferably adjusted in a correlation with the water amount in the rice-processed material to be added. For example, the adjustment is preferably made by reducing the additive water amount and increasing the additive amount of the rice-processed material, so as to provide cooked rice having desired eating quality, oral texture, and the like.

Then, a cooking material is prepared by adding the rice-processed material to white rice. The method of addition is not particularly limited as long as the method can attach the rice-processed material on the surface of white rice grains after rice cooking. For example, the method may be only by putting a mass of the rice-processed material on white rice after water absorption, and may be by further mixing until the mass of the rice-processed material is invisible. At this time, the rice-processed material is preferably preheated at a temperature of 80-90°C for a minute or more to reduce its degree of viscosity. This is because by heating, the rice-processed material in a gel form becomes into a sol form (a paste form with flowability), thereby allowing avoiding formation of lumps, as well as providing uniform addition of the rice-processed material over entire white rice. The method of addition is not particularly limited, and can be performed by, for example, double boiling or microwave heating.

Here, the timing for adding the rice-processed material to white rice is not limited to after addition of water, and any timing can be employed for addition. For example, the timing may be before water absorption of white rice, or may be after water absorption and before addition of water.

Subsequently, the cooking material thus obtained is subjected to heat treatment (rice cooking) in a cooker. As the heating means, known heating means can be used without limitation, such as a rice cooker, a pan, a pressure pan, an electromagnetic cooker (such as an induction heating cooker), a microwave, or a steam oven. In view of generating convection currents in water as described later, these cookers particularly preferably have a round bottom.

The heating conditions in rice cooking such as temperature, pressure, and time also vary depending on heating means, the amount of water, and the like, and are difficult to identify unambiguously, but should just be adjusted appropriately so as to yield cooked rice having oral texture with desired viscosity, hardness, and the like.

By subjecting to the cooking material to rice cooking in a cooker as described above, water added to white rice generates convection currents by heating, and the rice-processed material generates convection currents along with water. Consequently, each rice grain is coated with the rice-processed material. That is, the rice-processed material can be attached evenly uniformly to the surface of rice grains.

The white rice that receives addition of the rice-processed material and is subjected to rice cooking in this way undergoes a freezing process described above to produce frozen food.

### 4-4. Production method for a frozen food in which food to be frozen is noodles or a noodle sheet

As an example of the representative embodiments of the present invention, a production method for a frozen food in which food to be frozen is noodles or a noodle sheet, particularly noodles, will be described below, but the production method for a frozen food according to the present invention is not limited to this.

First, noodle dough is prepared. Such dough can be prepared by kneading raw material powder such as strong flour or rice powder, water, salt, and the rice-processed material.

The procedure of adding the rice-processed material is not particularly limited, and for example, all raw materials may be combined and then kneaded in a single process, or the rice-processed material may be added to a kneaded material derived by kneading water and raw material powder in advance and further kneaded, or a material derived by blending the rice-processed material, water, and salt may be added to and kneaded with raw material powder.

At this time, the rice-processed material is preferably preheated at a temperature of 80-90°C for a minute or more to reduce its degree of viscosity. This is because the heating makes the rice-processed material in a gel form into a sol form (a paste form with flowability), thereby allowing avoiding formation of lumps, as well as providing uniform kneading of the rice-processed material into entire noodles. The method of addition is not particularly limited, and can be performed by, for example, double boiling or microwave heating.

As water used in production of dough, any water or aqueous solution such as water or lye water can be used depending on noodles of interest. The additive amount of water should just be adjusted appropriately so as to yield noodles having oral texture with desired springiness and hardness, and is preferably adjusted in a correlation with the water amount in the rice-processed material to be added. For example, the adjustment is preferably made by reducing the additive water amount and increasing the additive amount of the rice-processed material, so as to provide noodles having desired eating quality, oral texture, and the like.

Next, noodles are shaped by subjecting the above-described dough to noodle-making. The method of noodle-making is not particularly limited, and known method such as hand-stretched noodle-making or extruded noodle-making can be appropriately used. The most industrially typical methods of noodle-making include extruded noodle-making, which can be conducted using a device such as an extruded noodle-making machine.

Noodles to be produced may include any shaped noodles such as macaroni and flattened noodles. The method of shaping noodles is not particularly limited. For example, the dough may be extruded to form a noodle belt, and then subjected to rolling, cutting, and the like by routine methods to form a desired shape, or alternatively, noodles with a desired shape may be extruded and formed from a die having a hole with an appropriate shape.

The shaped noodles can be heat-prepared without undergoing a drying process, or after being preserved under a known preservation condition. The procedure of such heating preparation of noodles is not particularly limited, and for example, the heating preparation can be made in boiling water. The heat-prepared noodles are subjected to hot-water draining, cooling, seasoning, and the like according to common preparation methods, as needed.

The noodles into which the rice-processed material is kneaded undergo the freezing process described above to produce frozen food.

The frozen food of the present invention obtained in this way is thawed at eating. The thawing means may be spontaneous thawing or slow thawing, but it is preferable to quickly thaw with heat treatment such as microwave treatment, boiling treatment, heated vapor treatment, and oven treatment. In addition, when the frozen food is filled in the packaged container, it is preferably thawed with being contained in the packaged container from a hygiene perspective.

### Examples

The present invention will be specifically described with reference to the following Examples, but the present invention is not limited to the following Examples.

### [Example 1: Frozen cooked rice]

### [Production procedures]

### (Solation of gel-form material)

A gel-form material of high-amylose rice that has been cooked (product name: Rice gelee white rice soft type, manufacturer: Rice Technology Kawachi Co., Ltd.) was removed from a refrigerator, and warmed by double boiling. Double boiling was kept while the central temperature of the gel-form material reached 85°C, and such condition was maintained for 5 minutes or more to make the gel-form material into a sol form material (a paste form) with flowing softness.

Here, the gel-form material was a material in which cooked rice derived by cooking high-amylose rice and water in a ratio of 1:4 by weight was mechanically stirred to cause phase transition to a gel form, and was refrigerated stored at a temperature of 0-10°C just before using.

### (Preparation of rice-processed material)

Four grams of the sol-form material was transferred to a container, and 2 g of rice oil was added to form a rice-processed material.

Additionally, to allow visual assessment of the state of the mixture, food coloring was added to the rice-processed material.

### (Addition of rice-processed material)

Three hundred grams of white rice (Koshihikari grown in Ibaraki Prefecture) was washed and immersed in water at 25°C for 30 minutes. The white rice after immersion was transferred to a colander to drain off water. To this white rice, water was added to provide a total volume of 675 g, and the rice-processed material thus obtained was poured to yield a cooking material.

### (Rice cooking)

The cooking material thus obtained was heat-prepared with an induction heating rice cooker (product name: NP-NC18, manufacturer: Zojirushi Corp.)

### (Freezing)

The cooked rice was spread on a vat and cooled to room temperature. The cooled cooked rice was filled in a plastic container with a lid, and frozen at -16°C to produce frozen cooked rice.

### [Assessment for the state of mixture]

For the state of the rice-processed material, an extent of coloration of cooked rice left in the rice cooker was visually assessed just after rice cooking. The assessment was performed by 10 evaluators in accordance with the following criteria. The results were shown in Table 1.
1. No uneven coloration, and uniform addition of the rice-processed material.
2. Uneven coloration, and partially uneven distribution of the rice-processed material.
3. Partially deep coloration, uneven distribution of the rice-processed material, and presence of lumps of the rice-processed material.

### [Assessment for freezer burn]

The frozen cooked rice that had been stored at -16°C for 5 days was wrapped with plastic wrap, and heated and thawed with a microwave (700 W) until the surface temperature reached 70°C. The cooked rice after thawing was cooled to room temperature, and sensory evaluation by 10 evaluators was performed for an extent of freezer burn. The results were shown in Table 1.
1. No dryness, and no occurrence of freezer burn.
2. Some dryness, and occurrence of slight freezer burn.
3. Dryness in the same extent as without addition of the rice-processed material, and occurrence of freezer burn.

Here, rating acceptable as frozen food is 1-2.

### [Assessment for eating quality]

Sensory evaluation by 10 evaluators was performed for eating quality of each of the cooked rice just after rice cooking and the cooked rice after thawing. The results were shown in Table 1.

Here, thawing was performed by wrapping frozen cooked rice that had been stored at -16°C for 5 days, with plastic wrap, and heating it with a microwave (700 W) until the surface temperature reached 70°C.

### [Assessment for freezer burn prevention effect]

The frozen cooked rice that had been stored at -16°C for 5 days was heated in a microwave (700 W) and measured for time-dependent change of mass of the cooked rice. To reproduce a dry state after storing in a freezer for long periods, the frozen cooked rice was heated without covering with plastic wrap or the like. The results were shown in Table 1. Decrease rate of mass of the cooked rice is attributed to transpiration of water, and lower mass change indicates higher water retention effect, i.e., freezer burn prevention effect, of the rice-processed material.

### [Examples 2-10: Frozen cooked rice]

Frozen cooked rice was produced in the same manner as Example 1, except for using the rice-processed material shown in Table 1.

The frozen cooked rice thus produced was subjected to various assessments in the same manner as Example 1. The results were shown in Table 1.

| | Rice-processed material | | State of mixture | Freezer burn | Eating quality after rice cooking | Eating quality after thawing | Change of mass (% mass) | | | |
|---|---|---|---|---|---|---|---|---|---|---|
| | Gel-form material (g) | Rice oil (g) | | | | | 0 min after | 10 min after | 20 min after | 30 min after |
| Example 1 | 4 | 2 | 2 | 1 | Good | Somewhat less viscous | 100 | 97.9 | 97.0 | 96.6 |
| Example 2 | 8 | 2 | 2 | 1 | Good | Somewhat less viscous | 100 | 98.2 | 97.2 | 96.9 |
| Example 3 | 12 | 2 | 1 | 1 | Good | Good | 100 | 98.4 | 97.7 | 97.2 |
| Example 4 | 16 | 0.5 | 2 | 2 | Good | Somewhat hard | 100 | 98.3 | 97.5 | 97.1 |
| Example 5 | 16 | 1 | 1 | 1 | Good | Good | 100 | 98.3 | 97.3 | 97.1 |
| Example 6 | 16 | 2 | 1 | 1 | Good | Good | 100 | 98.8 | 98.0 | 97.6 |
| Example 7 | 16 | 4 | 1 | 1 | Slightly sticky | Slightly sticky | 100 | 98.1 | 97.3 | 96.9 |
| Example 8 | 16 | 6 | 1 | 1 | Sticky | Slightly sticky | 100 | 98.1 | 97.4 | 96.8 |
| Example 9 | 20 | 2 | 3 | 1 | Good | Rough to the tongue | 100 | 98.5 | 97.5 | 97.1 |
| Example 10 | 24 | 2 | 3 | 1 | Good | Rough to the tongue | 100 | 98.3 | 97.7 | 97.3 |

### [Example 11: Frozen udon]

### [Production procedure]

### (Solation of gel-form material)

A gel-form material of high-amylose rice that has been cooked (product name: Rice gelee white rice hard type, manufacturer: Rice Technology Kawachi Co., Ltd.) was removed from a refrigerator and warmed with a microwave. Heating was kept while the central temperature of the gel-form material reached 85°C and such condition was maintained for 5 minutes or more to make the gel-form material into a sol form material (a paste form) with flowing softness.

Here, the gel-form material was a material in which cooked rice derived by cooking high-amylose rice and water in a ratio of 1:2 by weight was mechanically stirred to cause phase transition to a gel form, and was refrigerated stored at a temperature of 0-10°C just before using.

### (Addition of rice-processed material)

A mixture was made with 118 g of water, 15 g of salt, and 25.98 g of the sol-form material as a rice-processed material. The mixture thus obtained was kneaded with 300 g of strong flour to yield noodle dough.

### (Noodle-making)

The noodle dough thus obtained was flattened out and formed into a noodle belt, and then cut out to yield fresh noodles of udon.

### (Heating preparation)

These fresh noodles were put into boiling water and heat-prepared for 5 minutes, thereby producing boiled noodles of udon.

### (Freezing)

The boiled noodles were transferred to a dish and cooled to room temperature. The cooled boiled noodles of udon were filled in a plastic bag with a zipper, and frozen at -16°C to produce frozen udon.

### [Assessment for freezer burn]

The boiled noodles of udon that had been stored at -16°C for 5 days were wrapped with plastic wrap, and heated and thawed with a microwave (700 W) until the surface temperature reached 70°C. The udon after thawing was cooled to room temperature, and sensory evaluation by 10 evaluators was performed for an extent of freezer burn in accordance with the following criteria. The results were shown in Table 2.
1. No dryness, and no occurrence of freezer burn.
2. Some dryness, and occurrence of slight freezer burn.
3. Dryness in the same extent as without addition of the rice-processed material, and occurrence of freezer burn.

Here, rating acceptable as frozen food is 1-2.

### [Assessment for oral texture after thawing]

The boiled noodles of udon that had been stored at -16°C for 5 days were heated and thawed with a microwave (700 W) until the surface temperature reached 70°C, and then put into boiling water and heat-prepared for 3 minutes. Sensory evaluation by 10 evaluators was performed for oral texture of the udon after heating preparation. The results were shown in Table 2.

### [Example 12: Frozen udon]

Frozen udon was produced in the same manner as Example 11, except for using the primary material shown in Table 2.

The frozen udon thus produced was subjected to various assessments in the same manner as Example 11. The results were shown in Table 2.

### [Reference Examples 1 and 2: Frozen udon]

Frozen udon was produced in the same manner as Example 11, except that the primary material was changed as shown in Table 2 without use of any rice-processed material.

The frozen udon thus produced was subjected to various assessments in the same manner as Example 11. The results were shown in Table 2.

| | Rice-processed material | Raw material powder | | Salt (g) | Water (mL) | Freezer burn | Eating quality after thawing and heating |
|---|---|---|---|---|---|---|---|
| | Gel-form material (g) | Medium flour (g) Strong flour (g) | | | | | |
| Example 11 | 25.98 | 0 | 300 | 15 | 118 | 1 | No change from heating preparation without freezing |
| Example 12-1 | 13.5 | 0 | 300 | 15 | 118 | 1 | No change from heating preparation without freezing |
| Example 12-2 | 9 | 0 | 300 | 15 | 127 | 1 | No change from heating preparation without freezing |
| Reference Example 1 | 0 | 0 | 300 | 15 | 145 | 1 | |
| Reference Example 2 | 0 | 300 | 0 | 15 | 145 | 1 | |

### [Example 13: Frozen spring roll wrappers]

### [Production procedure]

### (Solation of gel-form material)

The gel-form material A of high-amylose rice that has been cooked (product name: Rice gelee white rice hard type, manufacturer: Rice Technology Kawachi Co., Ltd.) was removed from a refrigerator and warmed with a microwave. Heating was kept while the central temperature of the gel-form material reached 85°C and such condition was maintained for 5 minutes or more to make the gel-form material into a sol form material (a paste form) with flowing softness.

Here, the gel-form material A was a material in which cooked rice derived by cooking high-amylose rice and water in a ratio of 1:2 by weight was mechanically stirred to cause phase transition to a gel form, and was refrigerated stored at a temperature of 0-10°C just before using.

### (Preparation of rice-processed material)

To 150 g of the sol-form material, 150 mL of sesame oil was added to form a rice-processed material.

### (Addition of rice-processed material)

A mixture was made with 400 mL of water, an appropriate amount of salt, and the rice-processed material. The mixture thus obtained was kneaded with 712 g of strong flour and 238 g of wheat flour to yield dough.

### (Shape forming)

The dough thus obtained was extruded with an extruder to form a sheet with a thickness of 1 mm, and then cut out into 15 cm square pieces to yield spring roll wrappers.

### (Heating preparation)

These spring roll wrappers were put into salad oil preheated to 180°C and heat-prepared for a minute, thereby producing prepared spring roll wrappers.

### (Freezing)

The prepared spring roll wrappers were transferred to an oil drain mesh and cooled to room temperature. The cooled spring roll wrappers were filled in a plastic bag with a zipper, and frozen at -16°C to produce frozen spring roll wrappers.

### [Assessment for freezer burn]

The prepared spring roll wrappers that had been stored at -16°C for 5 days were wrapped with plastic wrap, and heated and thawed with a microwave (700 W) until the surface temperature reached 70°C. The spring roll wrappers after thawing were cooled to room temperature, and sensory evaluation by 10 evaluators was performed for an extent of freezer burn in accordance with the following criteria. The results were shown in Table 3.
1. No dryness, and no occurrence of freezer burn.
2. Some dryness, and occurrence of some freezer burn.
3. Dryness in the same extent as without addition of the rice-processed material, and occurrence of freezer burn.

Here, rating acceptable as frozen food is 1-2.

### [Assessment for oral texture after thawing]

The prepared spring roll wrappers that had been stored at -16°C for 5 days were heated and thawed with a microwave (700 W) until the surface temperature reached 70°C. Sensory evaluation by 10 evaluators was performed for oral texture of the spring roll wrappers after thawing. The results were shown in Table 3.

Here, although frozen prepared spring roll wrappers were typically often roasted with oil or fried with oil to eat, a previous scientific finding has revealed that spring roll wrappers prepared by such methods receives less effect from freezing storage (such as the extent of dryness). Thus, in the Example, spring roll wrappers after freezing storage were heated and thawed with a microwave, and subjected to assessment for oral texture.

### [Example 14: Frozen spring roll wrappers]

Frozen spring roll wrappers were produced in the same manner as Example 13, except that the rice-processed material was prepared with the gel-form material B (product name: Rice gelee white rice soft type, manufacturer: Rice Technology Kawachi Co., Ltd.), instead of the gel-form material A of high-amylose rice that has been cooked, the amount of which was changed to an amount shown in Table 3, and that the amount of water was changed to an amount shown in Table 3.

Here, the gel-form material B was a material in which cooked rice derived by cooking high-amylose rice and water in a ratio of 1:4 by weight was mechanically stirred to cause phase transition to a gel form, and was refrigerated stored at a temperature 0-10°C just before using.

The frozen spring roll wrappers thus produced were subjected to various assessments in the same manner as Example 13. The results were shown in Table 3.

### [Examples 15-18: Frozen spring roll wrappers]

Frozen spring roll wrappers were produced in the same manner as Example 13, except for using the primary material shown in Table 3.

The frozen spring roll wrappers thus produced were subjected to various assessments in the same manner as Example 13. The results were shown in Table 3.

**[Table 3]**

| | Rice-processed material | Rice powder (g) | Freezer burn | Eating quality after thawing |
|---|---|---|---|---|
| | Gel-form material (g) | | | |
| Example 20 | 225 | 0 | 1 | No change from just after production |
| Example 21 | 188 | 37.5 | 1 | No change from just after production |
| Example 22 | 94 | 56.2 | 1 | No change from just after production |

### [Example 19: Frozen okonomiyaki]

### [Production procedure]

### (Solation of gel-form material)

A gel-form material of high-amylose rice that has been cooked (product name: Rice gelee white rice soft type, manufacturer: Rice Technology Kawachi Co., Ltd.) was removed from a refrigerator, and warmed by double boiling. Double boiling was kept while the central temperature of the gel-form material reached 85°C, and such condition was maintained for 5 minutes or more to make the gel-form material into a sol form material (a paste form) with flowing softness.

Here, the gel-form material was a material in which cooked rice derived by cooking high-amylose rice and water in a ratio of 1:4 by weight was mechanically stirred to cause phase transition to a gel form, and was refrigerated stored at a temperature of 0-10°C just before using.

### (Addition of rice-processed material)

Twenty grams of rice powder (manufacturer: Kumamoto Flour Milling Co., Ltd.), 20 mL of primary dashi broth, 70 g of chopped cabbage, a large size egg, 1.5 g of powdered bonito soup stock, 40 g of sliced pork belly, 1 g of red-colored shredded ginger, and 1 g of minced green onion were put into a container, and 30 g of the sol-form material obtained as a rice-processed material was further added, and then mixed to prepare a mix for gluten-free okonomiyaki (for one sheet).

### (Baking)

The mix thus obtained was thinly spread on a hot plate preheated to 160-220°C, baked for 5-10 minutes and then turned over, and further baked for 3-10 minutes to produce a gluten-free okonomiyaki (butatama).

### (Freezing)

The gluten-free okonomiyaki was transferred to a dish and cooled to room temperature. The cooled gluten-free okonomiyaki was filled in a plastic bag with a zipper, frozen at -16°C to produce a frozen okonomiyaki.

### [Assessment for freezer burn]

The frozen okonomiyaki that had been stored at -16°C for 5 days was wrapped with plastic wrap, and heated and thawed with a microwave (700 W) until the surface temperature reached 70°C. The gluten-free okonomiyaki after thawing was cooled to room temperature, and sensory evaluation by 10 evaluators was performed for an extent of freezer burn. The results revealed that the gluten-free okonomiyaki thus produced was not dried, and had no freezer burn.

### [Assessment for oral texture after thawing]

The gluten-free okonomiyaki that had been stored at -16°C for 5 days was heated and thawed with a microwave (700 W) until the surface temperature reached 70°C. Sensory evaluation by 10 evaluators was performed for oral texture of the gluten-free okonomiyaki after thawing. The results showed that oral texture of the gluten-free okonomiyaki after thawing was good with no change from just after production.

### [Example 20: Frozen takoyaki]

### [Production procedure]

### (Solation of gel-form material)

A gel-form material of high-amylose rice that has been cooked (product name: Rice gelee white rice hard type, manufacturer: Rice Technology Kawachi Co., Ltd.) was removed from a refrigerator, and warmed by double boiling. Double boiling was kept while the central temperature of the gel-form material reached 85°C, and such condition was maintained for 5 minutes or more to make the gel-form material into a sol form material (a paste form) with flowing softness.

Here, the gel-form material was a material in which cooked rice derived by cooking high-amylose rice and water in a ratio of 1:2 by weight was mechanically stirred to cause phase transition to a gel form, and was refrigerated stored at a temperature of 0-10°C just before using.

### (Addition of rice-processed material)

Seventy-five milliliters of primary dashi broth and a large size egg was put into a container and mixed, and 225 g of the sol-form material obtained as a rice-processed material was added and further mixed to prepare a mix for gluten-free takoyaki (for 12 balls).

### (Baking)

The mix for takoyaki thus obtained was poured into a takoyaki mold that was preheated at 160-220°C and coated with salad oil, and 60 g of chopped octopus and minced 1 stalk of green onion were further put into the mix for takoyaki, and baked with rotating the portions of the mix for takoyaki for 5-15 minutes to produce gluten-free takoyaki balls.

### (Freezing)

The gluten-free takoyaki balls were transferred to a dish and cooled to room temperature. The cooled gluten-free takoyaki balls were filled in a plastic bag with a zipper, frozen at -16°C to produce frozen takoyaki balls.

### [Assessment for freezer burn]

The frozen takoyaki balls that had been stored at -16°C for 5 days were wrapped with plastic wrap, and heated and thawed with a microwave (700 W) until the surface temperature reached 70°C. The cooked rice after thawing was cooled to room temperature, and sensory evaluation by 10 evaluators was performed for an extent of freezer burn in accordance with the following criteria. The results were shown in Table 4.
1. No dryness, and no occurrence of freezer burn.
2. Some dryness, and occurrence of some freezer burn.
3. Dryness in the same extent as without addition of the rice-processed material, and occurrence of freezer burn.

Here, rating acceptable as frozen food is 1-2.

### [Assessment for oral texture after thawing]

The gluten-free takoyaki balls that had been stored at -16°C for 5 days were heated and thawed with a microwave (700 W) until the surface temperature reached 70°C. Sensory evaluation by 10 evaluators was performed for oral texture of the gluten-free takoyaki balls after thawing. The results were shown in Table 4.

### [Examples 21 and 22: Frozen takoyaki]

Frozen takoyaki balls were produced in the same manner as Example 20, except that the amount of the rice-processed material was changed to the amount shown in Table 4 and that rice powder was used in the amount as shown in Table 4.

The frozen takoyaki balls thus produced were subjected to various assessments in the same manner as Example 20. The results were shown in Table 4.

| | Rice-processed material | | | Raw material powder | | | | | | | |
|---|---|---|---|---|---|---|---|---|---|---|---|
| | Gel-form material A (g) | Gel-form material B (g) | Sesame oil (g) | Wheat flour (g) | Strong flour (g) | Rice powder (g) | Starch powder (g) | Salt | Water (mL) | Freezer burn | Eating quality after thawing |
| Example 13 | 150 | 0 | 150 | 712 | 238 | 0 | 0 | proper amount | 400 | 1 | No change from just after production |
| Example 14 | 0 | 250 | 150 | 712 | 238 | 0 | 0 | proper amount | 300 | 1 | No change from just after production |
| Example 15 | 150 | 0 | 0 | 950 | 0 | 0 | 22.45 | proper amount | 900 | 1 | No change from just after production |
| Example 16 | 0 | 250 | 0 | 950 | 0 | 0 | 22.45 | proper amount | 800 | 1 | No change from just after production |
| Example 17 | 600 | 0 | 0 | 0 | 0 | 800 | 0 | proper amount | 1100 | 1 | No change from just after production |
| Example 18 | 0 | 1000 | 0 | 0 | 0 | 800 | 0 | proper amount | 700 | 1 | No change from just after production |

## Claims

1. A frozen food comprising a rice-processed material containing high-amylose rice that has been cooked, and food to be frozen.

2. The frozen food according to claim 1, wherein the food to be frozen is a grain-containing food.

3. The frozen food according to claim 2,
wherein the grain-containing food is a prepared rice containing rice grains, and
wherein the rice-processed material is attached to at least a surface of the rice grains.

4. The frozen food according to claim 2,
wherein the grain-containing food is noodles or a noodle sheet, and
wherein the rice-processed material is kneaded into the noodles or the noodle sheet.

5. The frozen food according to claim 3, wherein the rice-processed material further contains oils and fats.

6. The frozen food according to claim 5, wherein the rice-processed material is added in an amount allowing the high-amylose rice and the oils and fats to be added in amounts of 0.2 to 1.6 parts by mass and 0.3 to 7.0 parts by mass on 100 parts by mass of raw rice as a raw material of the prepared rice, respectively.

7. The frozen food according to claim 4, wherein the rice-processed material further contains oils and fats.

8. The frozen food according to claim 7, wherein the rice-processed material is added in an amount allowing the high-amylose rice and the oils and fats to be added in amounts of 1 to 30 parts by mass and 5 to 20 parts by mass on 100 parts by mass of a grain raw material of the noodles or the noodle sheet, respectively.

9. The frozen food according to any one of claims 5 through 8, wherein the oils and fats include at least one oil selected from among rice oil, rapeseed oil, safflower oil, sesame oil, flaxseed oil, olive oil, avocado oil, almond oil, and chia seed oil.

10. A production method for a frozen food, comprising adding a rice-processed material containing high-amylose rice that has been cooked, to food to be frozen or a raw material thereof.

11. The production method for a frozen food according to claim 10,
wherein the food to be frozen is a prepared rice containing rice grains, and
wherein the adding is performed by heat treating, in a cooker, a cooking material that includes raw rice as a raw material for the prepared rice and the rice-processed material.

12. A freezer burn prevention agent comprising a rice-processed material containing high-amylose rice that has been cooked.
